# EUROPEAN PATENT APPLICATION

(11) **EP 2 536 117 A1**
(43) Date of publication of application: **19.12.2012**
(21) Application number: 11741854.1
(22) Date of filing: 25.01.2011
(51) Int. Cl.: H04M 7/00, H04W 76/02, H04W 88/02

(54) **METHOD AND APPARATUS FOR ESTABLISHING CIRCUIT SWITCHED LINK OF WIFI HANDHELD EQUIPMENT**

(30) Priority: 12.02.2010 CN 201010119152
(71) Applicant: Huawei Device Co., Ltd., Shenzhen, Guangdong 518129 (CN)
(72) Inventor: ZHAO, Yang, Shenzhen Guangdong 518129 (CN)
(74) Representative: Epping - Hermann - Fischer
(86) International application number: PCT/CN2011/070557
(87) International publication number: WO 2011/097983

(57) **Abstract**

Embodiments of the present invention provide a method and an apparatus for establishing a circuit switched link for a WiFi handheld device, where the method includes: receiving a call request message sent by a WiFi handheld device, where the call request message is sent according to a SIP signaling format of VOIP; establishing a VOIP path with the WiFi handheld device according to the call request message; extracting a number of a called party from the call request message; and initiating a CS voice call to the called party according to the number of the called party, and establishing a CS voice path with the called party. By using the method and apparatus provided in the embodiments of the present invention, the WiFi handheld device may have a CS voice function and support a voice call without increasing any hardware cost, which enhances the service experience of a WiFi user and increases the revenue of an operator.

## Description

This application claims priority to Chinese Patent Application No. 201010119152.5, filed with the Chinese Patent Office on February 12, 2010 and entitled "METHOD AND APPARATUS FOR ESTABLISHING CIRCUIT SWITCHED LINK FOR WIFI HANDHELD DEVICE", which is incorporated herein by reference in its entirety.

### FIELD OF THE INVENTION

The present invention relates to the wireless communication field, and in particular, to a method and an apparatus for establishing a CS (Circuit Switched, circuit switched, circuit switched for short) link for a WiFi (Wireless Fidelity, wireless fidelity) handheld device in a wireless local area network.

### BACKGROUND OF THE INVENTION

Wi-Fi is a technology for interconnecting terminals such as a personal computer and a handheld device (for example, a PDA or a mobile phone) in wireless mode. Wi-Fi may help a user access emails, the Web, and streaming media, and may also provide wireless broadband Internet access for the user; in addition, Wi-Fi is a quick and convenient approach for network access at home or office, or on a trip. However, some existing WiFi handheld devices, for example, a flash memory MP4 player ITOUCH launched by Apple Inc., do not have a CS voice function, and support only services such as a data service and a VOIP (Voice over Internet Protocol, VOIP call) service although the devices are equipped with an external MIC (microphone, microphone) and an earphone.

### SUMMARY OF THE INVENTION

Embodiments of the present invention provide a method and an apparatus for establishing a circuit switched link for a WiFi handheld device, so that the WiFi handheld device may support the CS voice, which enhances the service experience of a WiFi user and increases the revenue of an operator.

In one aspect, an embodiment of the present invention provides a method for establishing a circuit switched link for a WiFi handheld device, where the method includes: receiving a call request message sent by a WiFi handheld device, where the call request message is sent according to a SIP signaling format of VOIP; establishing a VOIP path with the WiFi handheld device according to the call request message; extracting a number of a called party from the call request message; and initiating a CS voice call to the called party according to the number of the called party, and establishing a CS voice path with the called party.

In another aspect, an embodiment of the present invention further provides a 3G router, where the 3G router includes: a first receiving unit, configured to receive a call request message sent by a WiFi handheld device, where the call request message is sent according to a SIP signaling format of VOIP; a first establishing unit, configured to establish a VOIP path with the WiFi handheld device according to the call request message; an extracting unit, configured to extract a number of a called party from the call request message; and a second establishing unit, configured to initiate a CS voice call according to the number of the called party, and establish a CS voice path with the called party.

In still another aspect, an embodiment of the present invention further provides a method for establishing a circuit switched link for a WiFi handheld device, where the method is applied to a WiFi handheld device and includes: sending a call request message to a 3G router according to a SIP signaling format of VOIP; establishing a VOIP path with the 3G router; and establishing a CS voice path with a called party through the 3G router.

In still another aspect, an embodiment of the present invention further provides a WiFi handheld device, where the WiFi handheld device includes: an establishing unit, configured to send a call request message to a 3G router according to a SIP signaling format of VOIP, establish a VOIP path with the 3G router, and establish a CS voice path with a called party through the 3G router.

In still another aspect, an embodiment of the present invention further provides a method for establishing a circuit switched link for a WiFi handheld device, where the method includes: receiving a call request message sent by a CS voice terminal; establishing a CS voice path with the CS voice terminal according to the call request message; extracting a number of the WiFi handheld device from the call request message; and establishing a VOIP path with the WiFi handheld device according to the number of the WiFi handheld device.

In still another aspect, an embodiment of the present invention further provides a 3G router, where the 3G router includes: a first receiving unit, configured to receive a call request message sent by a CS voice terminal; a first establishing unit, configured to establish a CS voice path with the CS voice terminal according to the call request message; an extracting unit, configured to extract a number of a WiFi handheld device from the call request message; and a second establishing unit, configured to establish a VOIP path with the WiFi handheld device according to the number of the WiFi handheld device.

In still another aspect, an embodiment of the present invention also provides a method for establishing a circuit switched link for a WiFi handheld device, where the method is applied to a WiFi handheld device and includes: receiving a path establishment request message, which is sent by a 3G router after the 3G router establishes a CS voice path with a CS voice terminal according to a call request message sent by the CS voice terminal; and establishing a VOIP path with the 3G router.

In still another aspect, an embodiment of the present invention further provides a WiFi handheld device, where the WiFi handheld device includes: an establishing unit, configured to receive a path establishment request message, which is sent by a 3G router after the 3G router establishes a CS voice path with a CS voice terminal according to a call request message sent by the CS voice terminal, and establish a VOIP path with the 3G router.

By using the method and apparatus provided in embodiments of the present invention, the WiFi handheld device is enabled to have a CS voice function and support a voice call without increasing any hardware cost, which enhances the service experience of a WiFi user and increases the revenue of an operator.

### BRIEF DESCRIPTION OF THE DRAWINGS

The accompanying drawings illustrated herein are used to provide further understanding of the present invention and constitute part of this application, but do not limit the present invention. In the drawings:
FIG. 1 is a flowchart of a method according to an embodiment of the present invention;
FIG. 2 is a block diagram showing the composition of an apparatus according to the embodiment shown in FIG. 1;
FIG. 3 is a flowchart of a method according to another embodiment of the present invention;
FIG. 4 is a block diagram showing the composition of an apparatus according to the embodiment shown in FIG. 3;
FIG. 5 is a flowchart of a method according to another embodiment of the present invention;
FIG. 6 is a block diagram showing the composition of an apparatus according to the embodiment shown in FIG. 5;
FIG. 7 is a flowchart of a method according to another embodiment of the present invention; and
FIG. 8 is a block diagram showing the composition of an apparatus according to the embodiment shown in FIG. 7.

### DETAILED DESCRIPTION OF THE EMBODIMENTS

To make the objective, technical solution, and merits of the present invention clearer, the embodiments of the present invention are hereinafter described in detail with reference to embodiments and accompanying drawings. The exemplary embodiments and the descriptions thereof are intended to explain the present invention and do not serve as limitations on the present invention.

### Embodiment 1

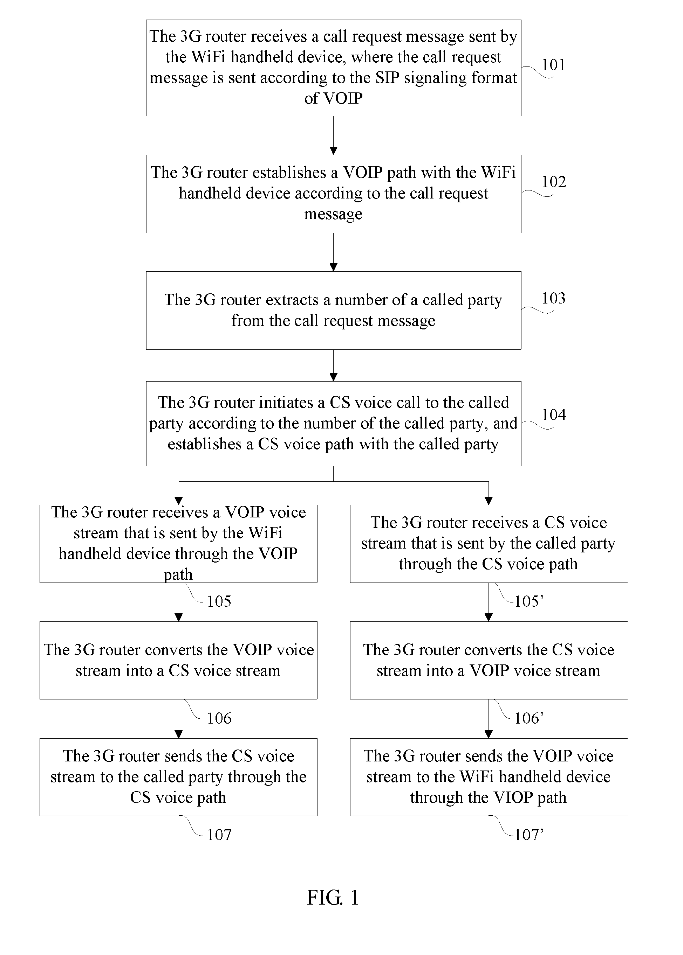

FIG. 1 is a flowchart of a method for establishing a circuit switched link for a WiFi handheld device according to this embodiment. The method is applied to a 3G router, the calling party is a WiFi handheld device and the called party is a CS voice terminal. Referring to FIG. 1, the method includes:
Step 101: The 3G router receives a call request message sent by the WiFi handheld device, where the call request message is sent according to an SIP signaling format of VOIP.
   In this embodiment, the WiFi handheld device may send the call request message to the 3G router by means of the prior art, that is, the message is sent according to the SIP signaling format of the VOIP protocol and transmitted to the 3G router through WiFi, which is covered by the prior art and not described here.
   The 3G router may support multiple WiFi handheld devices, and each WiFi handheld device has its own unique identifier, for example, a phone number. Therefore, when the WiFi handheld device is a calling party, the 3G router can identify which WiFi handheld device is to initiate a call; when the WiFi handheld device is a called party, the 3G router can also establish a VOIP path with the corresponding WiFi handheld device according to a number of the called party. In addition, because there is only one uplink CS voice path, in WiFi handheld devices attached to the 3G router, only one WiFi handheld device can be engaged in a call at a time.
Step 102: The 3G router establishes a VOIP path with the WiFi handheld device according to the call request message.
Step 103: The 3G router extracts the number of the called party from the call request message.
   In this embodiment, the 3G router may extract the number of the called party from the call request message.
Step 104: The 3G router initiates a CS voice call to the called party according to the number of the called party, and establishes a CS voice path with the called party.

At present, the chip of each 3G router has a CS voice function, but the CS voice function can be provided only in a manner such as externally connecting a phone; if a push button, an earphone, an earpiece, or an LCD is added to the 3G router, the cost of the 3G router will be increased.

In this embodiment, when the WiFi handheld device wants to perform a CS voice call, SIP dialing of VOIP is initiated first, and is transmitted to the 3G router device through a WiFi network; the 3G router establishes a complete VOIP path with the WiFi handheld device, extracts the called number from the call information, then initiates a CS voice call to the called party, and establishes a CS voice path with the called party according to a normal CS call procedure. In this way, the WiFi handheld device can support the CS voice function, and make a call with the called party through the foregoing VOIP path and CS voice path.

According to the method in this embodiment, the 3G router establishes a VOIP path with the WiFi handheld device, and establishes a CS voice path with the called party. In this way, the WiFi handheld device can support the CS voice function and transfer a voice stream through the foregoing VOIP path and CS voice path, which not only increases the revenue of an operator but also enhances the service experience of a WiFi user.

According to an implementation manner of this embodiment, when the WiFi handheld device sends a stream to the called party, the method further includes:
Step 105: The 3G router receives a VOIP voice stream that is sent by the WiFi handheld device through the VOIP path.
Step 106: The 3G router converts the VOIP voice stream into a CS voice stream.
Step 107: The 3G router sends the CS voice stream to the called party through the CS voice path.

According to another implementation manner of this embodiment, when the called party sends a stream to the WiFi handheld device, the method further includes:
Step 105': The 3G router receives a CS voice stream that is sent by the called party through the CS voice path.
Step 106': The 3G router converts the CS voice stream into a VOIP voice stream.
Step 107': The 3G router sends the VOIP voice stream to the WiFi handheld device through the VIOP path.

According to the method in this embodiment, a VOIP-CS voice path is established from the WiFi handheld device to the 3G router and then to the terminal of the called party, and the voice stream from the WiFi handheld device to the 3G router is a VOIP stream; after the 3G router converts the VOIP stream into a CS voice stream, both the call path and voice path of the calling party are established.

By using the method in this embodiment, the 3G router may assist the WiFi handheld device in supporting the CS voice function and further supporting the voice call, which enhances the service experience of a WiFi user and increases the revenue of an operator.

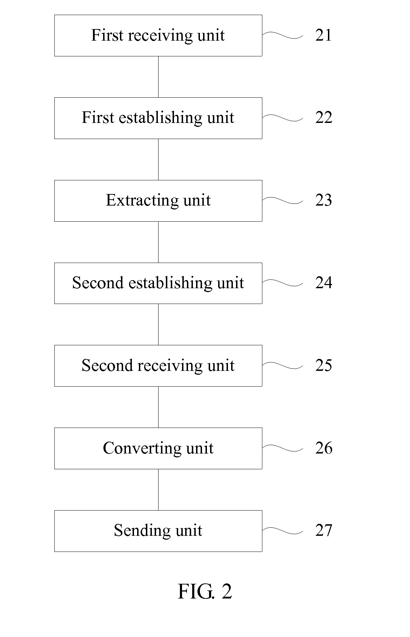

FIG. 2 is a schematic diagram showing the composition of a 3G router according to this embodiment. Referring to FIG. 2, the 3G router includes:
a first receiving unit 21, configured to receive a call request message sent by a WiFi handheld device, where the call request message is sent according to a SIP signaling format of VOIP;
a first establishing unit 22, configured to establish a VOIP path with the WiFi handheld device according to the call request message;
an extracting unit 23, configured to extract a number of a called party from the call request message; and
a second establishing unit 24, configured to initiate a CS voice call according to the number of the called party and establish a CS voice path with the called party.

According to an implementation manner of this embodiment, the 3G router further includes:
a second receiving unit 25, configured to receive a VOIP voice stream that is sent by the WiFi handheld device through the VOIP path, and/or, receive a CS voice stream that is sent by the called party through the CS voice path;
a converting unit 26, configured to convert the VOIP voice stream into a CS voice stream, and/or, convert the CS voice stream into a VOIP voice stream; and
a sending unit 27, configured to transfer the CS voice stream to the called party through the CS voice path, and/or, send the VOIP voice stream to the WiFi handheld device through the VOIP path.

Components of the apparatus in this embodiment are used to implement the steps of the method in the embodiment shown in FIG. 1 respectively; because each step is already detailed in the method embodiment shown in FIG. 1, details are not provided here.

By using the 3G router of this embodiment, the WiFi handheld device is enabled to support a CS voice function and further support the voice call, which enhances the service experience of a WiFi user and increases the revenue of an operator.

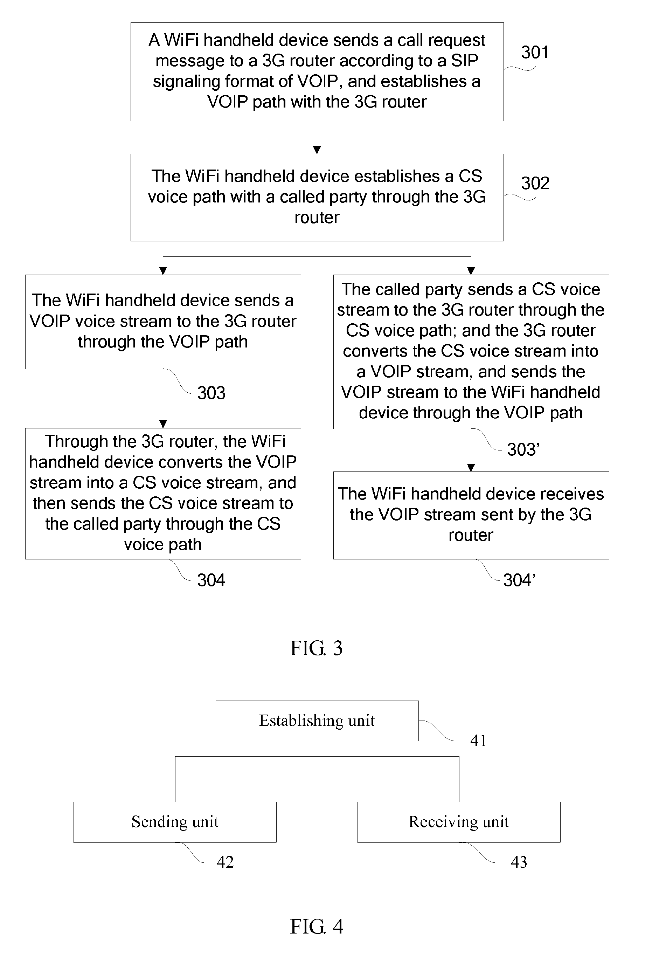

FIG. 3 is a flowchart of a method for establishing a circuit switched link of a WiFi handheld device according to this embodiment. The method is applied in a WiFi handheld device, the WiFi handheld device is a calling party and a called party is a CS voice terminal. Referring to FIG. 3, the method includes:
Step 301: The WiFi handheld device sends a call request message to a 3G router according to the SIP signaling format of VOIP, and establishes a VOIP path with the 3G router.
Step 302: The WiFi handheld device establishes a CS voice path with the called party through the 3G router.

The method in this embodiment corresponds to the method in the embodiment shown in FIG. 1. When the WiFi handheld device wants to make a CS voice call, the WiFi handheld device initiates SIP dialing of VOIP first, transfers the SIP dialing to the 3G router device through a WiFi network, and establishes a complete VOIP path with the 3G router; through the 3G router, the WiFi handheld device extracts the called number, initiates a CS voice call to the called party, and establishes a CS voice path with the called party according to a normal CS call procedure. In this way, the WiFi handheld device can support a CS voice function, and make a call with the called party through the foregoing VOIP path and CS voice path.

According to an implementation manner of this embodiment, when the WiFi handheld device sends a stream to the called party, the method further includes:
Step 303: The WiFi handheld device sends a VOIP voice stream to the 3G router through the VOIP path.
Step 304: Through the 3G router, the WiFi handheld device converts the VOIP stream into a CS voice stream, and then sends the CS voice stream to the called party through the CS voice path.

According to another implementation manner of this embodiment, when the called party sends a stream to the WiFi handheld device, the method further includes:
Step 303': The called party sends a CS voice stream to the 3G router through the CS voice path; and the 3G router converts the CS voice stream into a VOIP stream, and then sends the VOIP stream to the WiFi handheld device through the VOIP path.
Step 304': The WiFi handheld device receives the VOIP stream sent by the 3G router.

In this embodiment, a VOIP-CS voice path is established from the WiFi handheld device to the 3G router and then to the terminal of the called party, and the voice stream from the WiFi handheld device to the 3G router is a VOIP stream; after the 3G router converts the VOIP stream into a CS voice stream, both the call path and voice path of the calling party are established.

By using the method in this embodiment and with the assistance of the 3G router, the WiFi handheld device is enabled to support the CS voice function and further support the voice call, which enhances the service experience of a WiFi user and increases the revenue of an operator.

FIG. 4 is a schematic diagram showing the composition of a WiFi handheld device according to this embodiment; referring to FIG. 4, the WiFi handheld device includes:
an establishing unit 41, configured to send a call request message to a 3G router according to the SIP signaling format of VOIP, establish a VOIP path with the 3G router, and establish a CS voice path with a called party through the 3G router.

According to an implementation manner of this embodiment, the WiFi handheld device further includes:
a sending unit 42, configured to send a VOIP voice stream to the 3G router through the VOIP path, so that the 3G router converts the VOIP stream into a CS voice stream, and then sends the CS voice stream to the called party through the CS voice path.

According to an implementation manner of this embodiment, the WiFi handheld device further includes:
a receiving unit 43, configured to receive a VOIP stream that is sent by the 3G router through the VIOP path, where the VOIP stream is obtained after the 3G router converts a received CS voice stream, and the CS voice stream is sent by the called party to the 3G router through the CS voice path.

Components of the apparatus of this embodiment are used to implement the steps of the method in the embodiment shown in FIG. 3 respectively; because each step is already detailed in the method embodiment shown in FIG. 3, details are not provided here.

With the cooperation of the 3G router, the WiFi handheld device in this embodiment may support a CS voice function and further support the voice call, which enhances the service experience of a WiFi user and increases the revenue of an operator.

### Embodiment 2

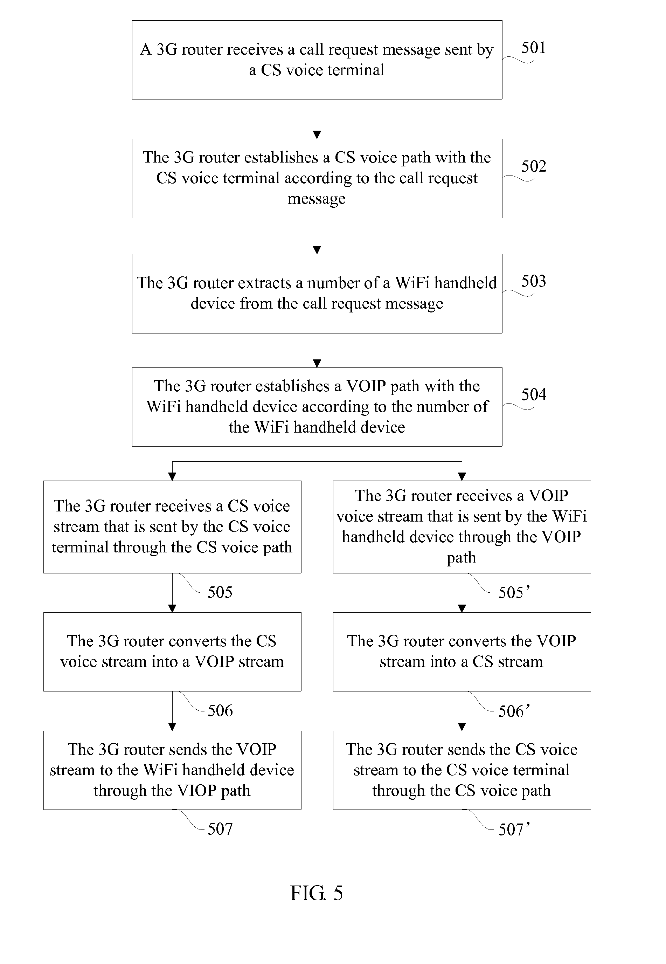

FIG. 5 is a flowchart of a method for establishing a circuit switched link for a WiFi handheld device according to this embodiment. The method is applied in a 3G router in a scenario where the calling party is a CS voice terminal and the called party is a WiFi handheld device. Referring to FIG. 5, the method includes:
Step 501: The 3G router receives a call request message sent by the CS voice terminal.
Step 502: The 3G router establishes a CS voice path with the CS voice terminal according to the call request message.
Step 503: The 3G router extracts a number of the WiFi handheld device from the call request message.
Step 504: The 3G router establishes a VOIP path with the WiFi handheld device according to the number of the WiFi handheld device.

In this embodiment, when a remote CS voice terminal wants to call the WiFi handheld device, the remote CS voice terminal calls the 3G router through a normal CS voice call first; after the 3G router establishes a CS voice call path with the CS voice terminal, the WiFi handheld device is called, and a VOIP path is established to the WiFi handheld device. In this way, the CS-VOIP path between the CS voice terminal and the WiFi handheld device is established, and the WiFi handheld device may use the path to make a CS voice call and support a CS voice function.

According to an implementation manner of this embodiment, when the CS voice terminal sends a stream to the WiFi handheld device, the method further includes:
Step 505: The 3G router receives a CS voice stream that is sent by the CS voice terminal through the CS voice path.
Step 506: The 3G router converts the CS voice stream into a VOIP stream.
Step 507': The 3G router sends the VOIP stream to the WiFi handheld device through the VOIP path.

According to another implementation manner of this embodiment, when the WiFi handheld device sends a stream to the CS voice terminal, the method further includes:
Step 505': The 3G router receives a VOIP stream that is sent by the WiFi handheld device through the VOIP path.
Step 506': The 3G router converts the VOIP stream into a CS voice stream.
Step 507': The 3G router sends the CS voice stream to the CS voice terminal through the CS voice path.

In this embodiment, after the CS-VOIP call path is established, the CS voice stream of the CS voice terminal is transmitted to the 3G router through the established CS voice path; after the 3G router converts the CS voice stream into a VOIP stream, the VOIP stream is transmitted to the WiFi handheld device through the VOIP path.

By using the method in this embodiment, the 3G router may assist the WiFi handheld device in supporting the CS voice function and further supporting the voice call, which enhances the service experience of a WiFi user and increases the revenue of an operator.

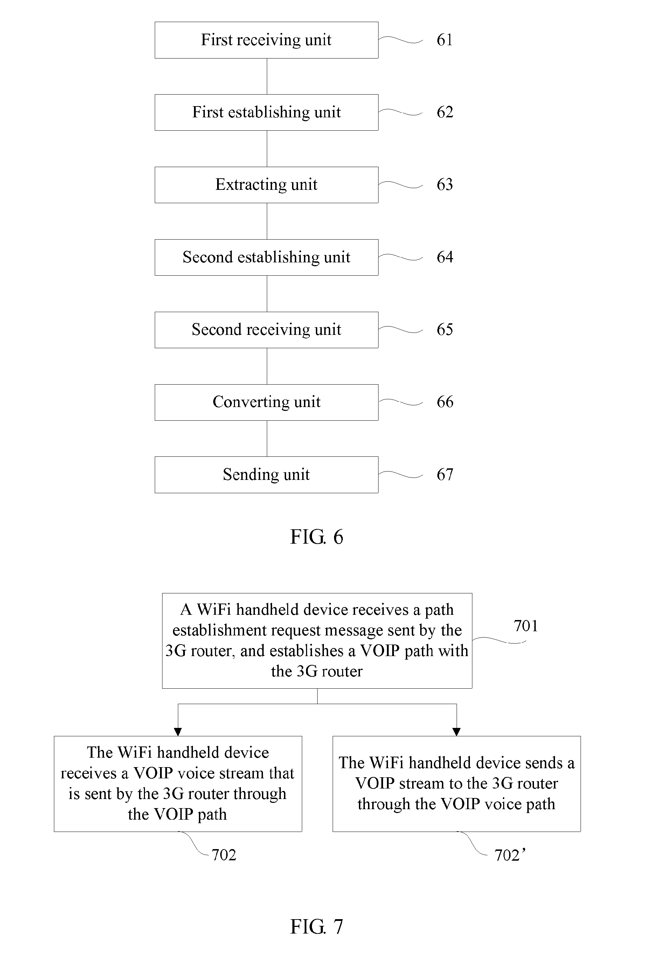

FIG. 6 is a schematic diagram showing the composition of a 3G router according to this embodiment. Referring to FIG. 6, the 3G router includes:
a first receiving unit 61, configured to receive a call request message sent by a CS voice terminal;
a first establishing unit 62, configured to establish a CS voice path with the CS voice terminal according to the call request message;
an extracting unit 63, configured to extract a number of a WiFi handheld device from the call request message; and
a second establishing unit 64, configured to establish a VOIP path with the WiFi handheld device according to the number of the WiFi handheld device.

According to an implementation manner of this embodiment, the 3G router further includes:
a second receiving unit 65, configured to receive a CS voice stream that is sent by the CS voice terminal through the CS voice path, and/or, receive a VOIP stream that is sent by the WiFi handheld device through the VOIP path;
a converting unit 66, configured to convert the CS voice stream into a VOIP stream, and/or, convert the VOIP stream into a CS voice stream; and
a sending unit 67, configured to send the VOIP stream to the WiFi handheld device through the VOIP path, and/or, send the CS voice stream to the CS voice terminal through the CS voice path.

Components of the apparatus of this embodiment are used to implement the steps of the method in the embodiment shown in FIG. 5 respectively; because each step is already detailed in the method embodiment shown in FIG. 5, details are not provided here.

By using the 3G router in this embodiment, the WiFi handheld device may support a CS voice function and further support the voice call, which enhances the service experience of a WiFi user and increases the revenue of an operator.

FIG. 7 is a flowchart of a method for establishing a circuit switched link of a WiFi handheld device according to this embodiment. The method is applied in a WiFi handheld device, the WiFi handheld device is a called party and a calling party is a CS voice terminal. Referring to FIG. 7, the method includes:
Step 701: The WiFi handheld device receives a path establishment request message sent by a 3G router, and establishes a VOIP path with the 3G router.

The 3G router initiates a call to the WiFi handheld device by extracting a number of the called party from the call request message, namely, the number of the WiFi handheld device, after the 3G router establishes a CS voice path with the CS voice terminal according to the call request message upon receiving the call request message of the CS voice terminal; the WiFi handheld device receives the path establishment request message sent by the 3G router, and establishes a VOIP path with the 3G router.

The method in this embodiment corresponds to the method in the embodiment shown in FIG. 5. When a remote CS voice terminal wants to call the WiFi handheld device, the remote CS voice terminal calls the 3G router through a normal CS voice call first; after the 3G router establishes a CS voice call path with the CS voice terminal, the WiFi handheld device is called, and a VOIP path is established to the WiFi handheld device. In this way, the CS-VOIP path between the CS voice terminal and the WiFi handheld device is established, and the WiFi handheld device may use the path to make a CS voice call and support a CS voice function.

According to an implementation manner of this embodiment, when the CS voice terminal sends a stream to the WiFi handheld device, the method further includes:
Step 702: The WiFi handheld device receives a VOIP stream that is sent by the 3G router through the VOIP path, where the VOIP stream is obtained after the 3G router converts a received CS voice stream, and the CS voice stream is sent by the CS voice terminal to the 3G router through the CS voice path established between the CS voice terminal and the 3G router.

According to another implementation manner of this embodiment, when the WiFi handheld device sends a stream to the CS voice terminal, the method further includes:
Step 702': The WiFi handheld device sends a VOIP stream to the 3G router through the VOIP voice path, and the 3G router converts the VOIP stream into a CS voice stream, and then sends the CS voice stream to the CS voice terminal through the CS voice path established between the 3G router and the CS voice terminal.

In this embodiment, after the CS-VOIP call path is established, the CS voice stream of the CS voice terminal is transmitted to the 3G router through the established CS voice path; after the 3G router converts the CS voice stream into a VOIP stream, the VOIP stream is transmitted to the WiFi handheld device through the VOIP path.

By using the method in this embodiment and with the assistance of the 3G router, the WiFi handheld device may support the CS voice function and further support the voice call, which enhances the service experience of a WiFi user and increases the revenue of an operator.

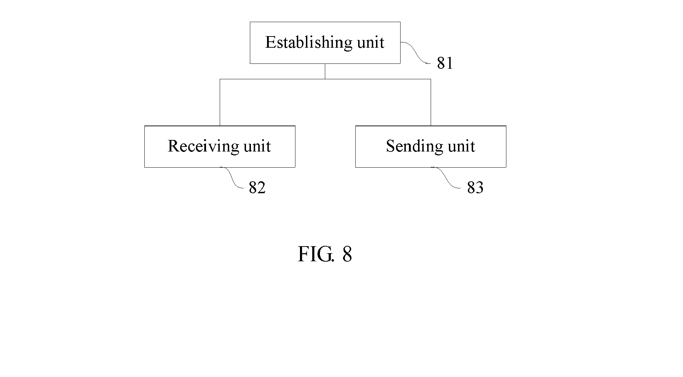

FIG. 8 is a schematic diagram showing the composition of a WiFi handheld device according to this embodiment. Referring to FIG. 8, the WiFi handheld device includes:
an establishing unit 81, configured to receive a path establishment request message sent by the 3G router, and establish a VOIP path with the 3G router.

The 3G router initiates a call to the WiFi handheld device by extracting a number of a called party from the call request message, namely, the number of the WiFi handheld device, after the 3G router establishes a CS voice path with the CS voice terminal according to the call request message upon receiving the call request message of the CS voice terminal; the WiFi handheld device receives, through the establishing unit 81, the path establishment request message sent by the 3G router, and establishes a VOIP path with the 3G router.

According to an implementation manner of this embodiment, the WiFi handheld device further includes:
a receiving unit 82, configured to receive a VOIP stream that is sent by the 3G router through the VOIP path, where the VOIP stream is obtained after the 3G router converts a received CS voice stream, and the CS voice stream is sent by the CS voice terminal to the 3G router through the CS voice path established between the CS voice terminal and the 3G router.

According to another implementation manner of this embodiment, the WiFi handheld device further includes:
a sending unit 83, configured to send a VOIP stream to the 3G router through the VOIP voice path, so that the 3G router converts the VOIP stream into a CS voice stream and sends the CS voice stream to the CS voice terminal through the CS voice path established to the CS voice terminal.

Components of the apparatus of this embodiment are used to implement the steps of the method of the embodiment shown in FIG. 7 respectively; because each step is already described in detail in the method embodiment shown in FIG. 7, details are not provided here.

With the cooperation of the 3G router, the WiFi handheld device in this embodiment may support a CS voice function and further support the voice call, which enhances the service experience of a WiFi user and increases the revenue of an operator.

The method or algorithm described in combination with the embodiments disclosed in this document may be implemented by hardware directly or by a software module of a processor, or by a combination of both. The software module may be placed in a random access memory (RAM), a memory, a read only memory (ROM), an electrically programmable ROM, an electrically erasable programmable ROM, a register, a hard disk, a removable disk, a CD-ROM, or a storage medium of any other form known in the art.

The objectives, technical solutions, and benefits of the present invention have been described in further detail with reference to the foregoing embodiments. It should be understood that what are described above are only specific embodiments of the present invention and are not intended to limit the protection scope of the present invention. All modifications, equivalent substitutions, and improvements made without departing from the spirit and principle of the present invention shall fall within the protection scope of the present invention.

## Claims

1. A method for establishing a circuit switched link for a WiFi handheld device in a wireless local area network, comprising:
receiving a call request message sent by a WiFi handheld device, wherein the call request message is sent according to a SIP signaling format of VOIP;
establishing a VOIP path with the WiFi handheld device according to the call request message;
extracting a number of a called party from the call request message; and
initiating a CS voice call to the called party according to the number of the called party, and establishing a CS voice path with the called party.

2. The method according to claim 1, further comprising:
receiving a VOIP voice stream that is sent by the WiFi handheld device through the VOIP path, converting the VOIP voice stream into a CS voice stream, and sending the CS voice stream to the called party through the CS voice path; and/or
receiving a CS voice stream that is sent by the called party through the CS voice path, converting the CS voice stream into a VOIP voice stream, and sending the VOIP voice stream to the WiFi handheld device through the VIOP path.

3. A third generation 3G router, comprising:
a first receiving unit, configured to receive a call request message sent by a WiFi handheld device, wherein the call request message is sent according to a SIP signaling format of VOIP;
a first establishing unit, configured to establish a VOIP path with the WiFi handheld device according to the call request message;
an extracting unit, configured to extract a number of a called party from the call request message; and
a second establishing unit, configured to initiate a CS voice call according to the number of the called party, and establish a CS voice path with the called party.

4. The 3G router according to claim 3, further comprising:
a second receiving unit, configured to receive a VOIP voice stream that is sent by the WiFi handheld device through the VOIP path, and/or, receive a CS voice stream that is sent by the called party through the CS voice path;
a converting unit, configured to convert the VOIP voice stream into a CS voice stream, and/or, convert the CS voice stream into a VOIP voice stream; and
a sending unit, configured to transmit the CS voice stream to the called party through the CS voice path, and/or, send the VOIP voice stream to the WiFi handheld device through the VIOP path.

5. A method for establishing a circuit switched link for a WiFi handheld device, wherein the method is applied to a WiFi handheld device and comprises:
sending a call request message to a 3G router according to a SIP signaling format of VOIP; establishing a VOIP path with the 3G router; and establishing a CS voice path with a called party through the 3G router.

6. The method according to claim 5, further comprising:
sending a VOIP voice stream to the 3G router through the VOIP path, converting, by the 3G router, the VOIP stream into a CS voice stream, and then sending the CS voice stream to the called party through the CS voice path; and/or
receiving, through the VOIP path, a VOIP voice stream sent by the 3G router, wherein the VOIP stream is obtained after the 3G router converts a CS voice stream into a VOIP stream upon the called party sending the CS voice stream to the 3G router through the CS voice path.

7. A WiFi handheld device, comprising:
an establishing unit, configured to send a call request message to a 3G router according to a SIP signaling format of VOIP, establish a VOIP path with the 3G router, and establish a CS voice path with a called party through the 3G router.

8. The WiFi handheld device according to claim 7, further comprising:
a sending unit, configured to send a VOIP voice stream to the 3G router through the VOIP path, so that the 3G router converts the VOIP stream into a CS voice stream, and then sends the CS voice stream to the called party through the CS voice path; and/or
a receiving unit, configured to receive, through the VOIP path, a VOIP voice stream sent by the 3G router, wherein the VOIP stream is obtained after the 3G router converts a CS voice stream into a VOIP stream upon the called party sending the CS voice stream to the 3G router through the CS voice path.

9. A method for establishing a circuit switched link of a WiFi handheld device, comprising:
receiving a call request message sent by a CS voice terminal;
establishing a CS voice path with the CS voice terminal according to the call request message;
extracting a number of the WiFi handheld device from the call request message; and
establishing a VOIP path with the WiFi handheld device according to the number of the WiFi handheld device.

10. The method according to claim 9, further comprising:
receiving a CS voice stream that is sent by the CS voice terminal through the CS voice path, converting the CS voice stream into a VOIP stream, and sending the VOIP stream to the WiFi handheld device through the VOIP path; and/or
receiving a VOIP voice stream that is sent by the WiFi handheld device through the VOIP path, converting the VOIP stream into a CS voice stream, and sending the CS voice stream to the CS voice terminal through the CS voice path.

11. A 3G router, comprising:
a first receiving unit, configured to receive a call request message sent by a CS voice terminal;
a first establishing unit, configured to establish a CS voice path with the CS voice terminal according to the call request message;
an extracting unit, configured to extract a number of a WiFi handheld device from the call request message; and
a second establishing unit, configured to establish a VOIP path with the WiFi handheld device according to the number of the WiFi handheld device.

12. The 3G router according to claim 11, further comprising:
a second receiving unit, configured to receive a CS voice stream that is sent by the CS voice terminal through the CS voice path, and/or, receive a VOIP stream that is sent by the WiFi handheld device through the VOIP path;
a converting unit, configured to convert the CS voice stream into a VOIP stream, and/or, convert the VOIP stream into a CS voice stream; and
a sending unit, configured to send the VOIP stream to the WiFi handheld device through the VOIP path, and/or, send the CS voice stream to the CS voice terminal through the CS voice path.

13. A method for establishing a circuit switched link of a WiFi handheld device, wherein the method is applied to a WiFi handheld device and comprises:
receiving a path establishment request message, which is sent by a 3G router after the 3G router establishes a CS voice path with a CS voice terminal according to a call request message sent by the CS voice terminal; and establishing a VOIP path with the 3G router.

14. The method according to claim 13, further comprising:
receiving a VOIP stream that is sent by the 3G router through the VOIP path, wherein the VOIP stream is obtained after the 3G router converts a received CS voice stream, and the CS voice stream is sent by the CS voice terminal to the 3G router through the CS voice path established between the CS voice terminal and the 3G router; and/or
sending a VOIP stream to the 3G router through the VOIP path, wherein the 3G router converts the VOIP stream into a CS voice stream, and then sends the CS voice stream to the CS voice terminal.

15. A WiFi handheld device, comprising:
an establishing unit, configured to receive a path establishment request message, which is sent by a 3G router after the 3G router establishes a CS voice path with a CS voice terminal according to a call request message sent by the CS voice terminal, and establish a VOIP path with the 3G router.

16. The WiFi handheld device according to claim 15, further comprising:
a receiving unit, configured to receive a VOIP stream that is sent by the 3G router through the VOIP path, wherein the VOIP stream is obtained after the 3G router converts a received CS voice stream, and the CS voice stream is sent by the CS voice terminal to the 3G router through the CS voice path established with between the CS voice terminal and the 3G router; and/or
a sending unit, configured to send a VOIP stream to the 3G router through the VOIP path, so that the 3G router converts the VOIP stream into a CS voice stream, and then sends the CS voice stream to the CS voice terminal.
